# EUROPÄISCHE PATENTANMELDUNG

(11) **EP 0 982 248 A1**
(43) Veröffentlichungstag der Anmeldung: **01.03.2000**
(21) Anmeldenummer: 99114050.0
(22) Anmeldetag: 20.07.1999
(51) Int. Cl.: B65G 47/26

(54) **Fördervorrichtung in einer Verpackungsmaschine**

(30) Priorität: 28.08.1998 DE 19839391
(71) Anmelder: IWK Verpackungstechnik GmbH, 76297 Stutensee-Blankenloch (DE)
(72) Erfinder: Rink, Willi, 76187 Karlsruhe (DE)
(74) Vertreter: Lasch, Hartmut Dipl.-Ing.

(57) **Zusammenfassung**

Auf einer Fördervorrichtung in einer Verpackungsmaschine sind mehrere quer zur Förderrichtung nebeneinander angeordnete Verpackungen und/oder Produkte (12) zusammen transportierbar. Mittels einer Leitvorrichtung (10) kann dabei der gegenseitige seitliche Abstand der Verpackungen und/oder Produkte quer zur Förderrichtung verändert werden. Um eine Bremsung der Produkte in der Leitvorrichtung zu vermeiden, weist die Leitvorrichtung (10) mehrere nebeneinander in Förderrichtung verlaufende Förderbänder (11a,b,c) zur Aufnahme jeweils einer Verpackung und/oder eines Produkts auf, die derart schräg zueinander ausgerichtet sind, daß ihr gegenseitiger, quer zur Förderrichtung gemessener Abstand in Förderrichtung zunimmt. Die Förderbänder (11a,b,c) sind im wesentlichen gleich lang und sind mittels einer gemeinsamen Antriebsvorrichtung angetrieben.

## Beschreibung

Die Erfindung betrifft eine Fördervorrichtung in einer Verpackungsmaschine, mit der mehrere quer zur Förderrichtung nebeneinander angeordnete Verpackungen und/oder Produkte zusammen transportierbar sind, wobei eine Leitvorrichtung vorgesehen ist, mittels der der gegenseitige Abstand der Verpackungen und/oder Produkte quer zur Förderrichtung veränderbar ist.

In Abfüll- und Verpackungsmaschinen durchlaufen die Produkte und/oder die Verpackungen verschiedene Bearbeitungsstationen und werden zwischen diesen mittels Transportvorrichtungen beispielsweise in Form von Förderbändern transportiert. Wenn mehrere Produkte und/oder Verpackungen gleichzeitig, d.h. in einer Gruppe in nebeneinander liegender Ausrichtung transportiert werden sollen, tritt häufig das Problem auf, daß die Produkte nicht den gewünschten seitlichen Abstand besitzen. Wenn beispielsweise drei Tuben gleichzeitig abgefüllt worden sind und nun zur Verpackungseinheit weitertransportiert werden sollen, gelangen sie mit einem gegenseitigen seitlichen Abstand von ca. 50mm auf das Förderband. Da sie bei Übergabe an die nachgeschaltete Verarbeitungsstation jedoch einen größeren gegenseitigen seitlichen Abstand von ca. 75mm aufweisen sollen, müssen sie während des Transportes relativ zueinander seitlich versetzt werden.

Zu diesem Zweck ist es bekannt, oberhalb des Förderbandes feststehende Leitbleche vorzusehen, die die seitlich angeordneten Tuben nach außen ableiten, um so den gegenseitigen Abstand der Tuben quer zur Förderrichtung zu vergrößern. Es hat sich jedoch gezeigt, daß die seitlichen Tuben während der Ablenkbewegung mittels der Leitwände, bei der sie an diesen entlangrutschen, relativ stark abgebremst werden, so daß sie gegenüber der mittleren, ungebremsten Tube deutlich nachlaufen. Da die Tuben jedoch am Ende des Förderbandes gleichzeitig in die nachfolgende Bearbeitungsstation eingebracht werden müssen, muß die voreilende mittlere Tube am Ende des Förderbandes auf die nacheilenden seitlichen Tuben warten, wodurch die Bearbeitungszeit verlängert ist. Darüber hinaus muß eine spezielle Vorrichtung vorgesehen werden, um die nacheinander ankommenden Tuben aufzunehmen und gleichzeitig in die Bearbeitungsstation, insbesondere eine Kartonierstation, einzuleiten, wodurch der konstruktive Aufwand erhöht ist.

Der Erfindung liegt die Aufgabe zugrunde, eine Fördervorrichtung in einer Verpackungsmaschine der genannten Art zu schaffen, mit der der gegenseitige seitliche Abstand der Produkte und/oder Verpackungen veränderbar ist, ohne daß diese einander vor- oder nachlaufen.

Diese Aufgabe wird erfindungsgemäß bei einer Fördervorrichtung dadurch gelöst, daß die Leitvorrichtung mehrere nebeneinander in Förderrichtung verlaufende Förderbänder zur Aufnahme jeweils einer Verpackung und/oder eines Produkts aufweist, die derart schräg zueinander angeordnet sind, daß ihr gegenseitiger, quer zur Förderrichtung gemessener Abstand sich in Förderrichtung ändert, und daß die Förderbänder im wesentlichen gleich lang sind und mittels einer gemeinsamen Antriebsvorrichtung antreibbar sind.

Erfindungsgemäß wird von der Grundüberlegung ausgegangen, zur Vergrößerung bzw. Veränderung des gegenseitigen Abstandes der einzelnen Tuben oder Produkte einer Gruppe diese nicht zwangsweise seitlich auf dem Förderband zu verschieben, sondern die Vorrichtung ist zumindest abschnittsweise von mehreren einzelnen, der Anzahl der Produkte oder Tuben entsprechenden Förderbändern gebildet, die unter einem geringen Winkel schräg zueinander verlaufen. Wenn auf der Eingangsseite jedem Förderband eine Tube aufgegeben wird, ändert sich der gegenseitige seitliche Abstand der Tuben, wenn diese die einzelnen Förderbändern entlanglaufen. Am Ende der Förderbänder können die Tuben entweder direkt in die nachgeschaltete Bearbeitungsstation übergeben werden oder es ist ein für alle Tuben gemeinsames, einheitliches, weiterführendes Förderband vorgesehen.

Aufgrund der geringen Schrägstellung der Förderbänder relativ zueinander unterscheiden sich die von den einzelnen Tuben zurückzulegenden Transportstrecken um ein geringes Maß voneinander. Um zu gewährleisten, daß die Tuben gleichzeitig am Ende der Förderbänder ankommen, kann entweder eine Steuerung vorgesehen sein, die die Bänder mit unterschiedlicher Geschwindigkeit antreibt und somit die Abweichung ausgleicht. In der Regel sind die Abweichungen jedoch so gering, daß ein Ausgleich bei der Übergabe der Tuben an die Förderbänder bzw. der Abgabe von diesen berücksichtigt werden kann. Dies ermöglicht es, in bevorzugter Ausgestaltung der Erfindung vorzusehen, daß die Förderbänder im wesentlichen gleich lang sind und mittels einer gemeinsamen Antriebsvorrichtung angetrieben werden, wodurch der konstruktive Aufwand gering gehalten ist und darüber hinaus sichergestellt ist, daß die Förderbänder mit der gleichen Geschwindigkeit bewegt werden.

Die Förderbänder sind in bekannter Weise zumindest in ihren Endbereichen über Rollen geführt. In bevorzugter Ausgestaltung der Erfindung ist vorgesehen, daß die Förderbänder eine gemeinsame Antriebswelle aufweisen, auf der mehrere Rollen gelagert sind. Über jede dieser Rollen ist eines der Förderbänder geführt und wird somit angetrieben. In vielen Fällen werden drei Förderbänder nebeneinander vorgesehen, wobei das mittlere Förderband gradlinig in Förderrichtung verläuft, während die beiden äußeren Förderbänder jeweils zur Außenseite leicht schräg ausgelenkt sind. Die Erfindung ist jedoch bei allen Fördervorrichtungen anwendbar, die zumindest zwei Förderbänder aufweisen. Da die Drehachsen der endseitigen Rollen der einzelnen Förderbändern somit nicht zusammenfallen, müssen spezielle Ausgestaltungen vorgesehen werden, um alle Förderbänder mittels einer gemeinsamen Antriebswelle in gleicher Weise antreiben zu können. Dies wird erfindungsgemäß dadurch erreicht, daß eine der Rollen und insbesondere eine mittlere Rolle, d.h. die dem mittleren, gradlinigen Förderband zugeordnete Rolle, drehfest mit der Antriebswelle verbunden ist, die sich im wesentlichen senkrecht zur Längserstreckung des Förderbandes und somit der Förderrichtung erstreckt. Die seitlichen Rollen, über die jeweils eines der schräg verlaufenden Förderbänder geführt ist, erhalten ihre Drehbewegung nicht unmittelbar von der Antriebswelle, sondern sind mit dieser nur mittelbar hinsichtlich des Drehantriebs verbunden. Zu diesem Zweck sind die seitlichen Rollen frei drehbar auf der Antriebswelle gelagert und können gleichzeitig eine Pendelbewegung auf dieser frei ausführen, d.h. eine Schwenkbewegung um eine senkrecht zur Antriebswelle liegenden Schwenkachse. Die mit der Drehbewegung der Antriebswelle und somit der mittleren Rolle synchronisierte Drehbewegung der seitlichen Rollen wird dadurch erreicht, daß diese jeweils mittels eines Übertragungselementes mit der mittleren Rolle in Verbindung steht. Das Übertragungselement ist dabei so ausgestaltet, daß die mittlere Rolle mit der jeweils seitlichen Rolle drehfest verbunden ist, jedoch die Pendelbewegung der seitlichen Rolle relativ zur mittleren Rolle und somit zur Antriebswelle zugelassen ist. Eine besonders einfache Ausgestaltung des Übertragungselementes läßt sich erreichen, wenn dieses eine um die Antriebswelle umlaufende Spiralfeder ist. Die Drehbewegung der mittleren Rolle wird über eine Drehung der Spiralfeder um ihre Längsachse im wesentlichen ohne elastische Verformung übertragen, während die Pendelbewegung der seitlichen Rolle aufgrund der Elastizität der Spiralfeder in ihrer Längsrichtung zugelassen ist. Alternativ kann auch ein Balg als Übertragungselement Verwendung finden.

Weitere Einzelheiten und Merkmale der Erfindung sind aus der folgenden Beschreibung eines Ausführungsbeispiels unter Bezugnahme auf die beigefügte Zeichnung ersichtlich. Es zeigen:
- Figur 1: eine schematische Aufsicht auf die Leitvorrichtung und
- Figur 2: einen Horizontalschnitt durch die Antriebsvorrichtung der Leitvorrichtung.

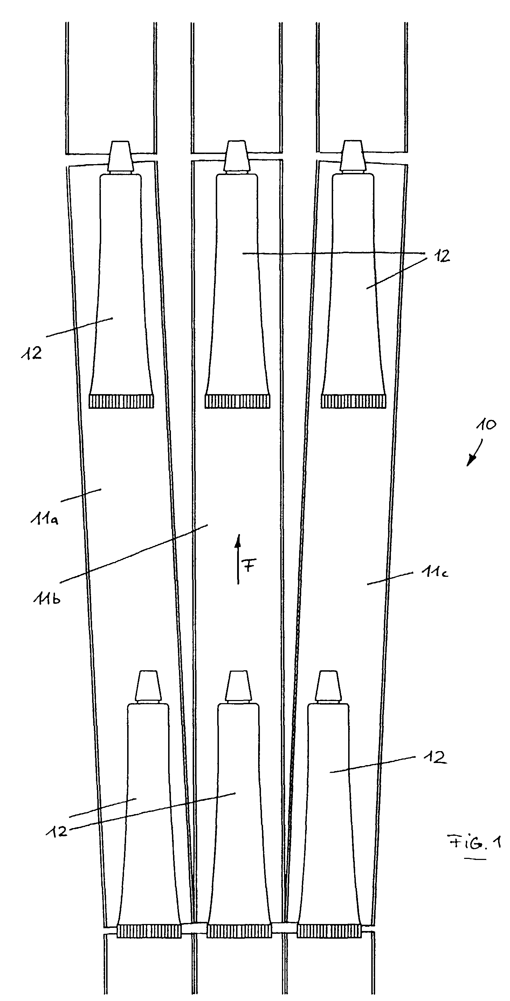

Figur 1 zeigt in schematischer Darstellung, wie der gegenseitige seitliche Abstand von drei Tuben 12, die jeweils in einer Bearbeitungsgruppe zusammengefaßt sind, längs des Förderweges verändert wird. Die drei Tuben 12 kommen am eingangsseitigen, d.h. gemäß Figur 1 unteren Ende einer Leitvorrichtung 10 an und werden dann auf jeweils ein eigenes Förderband 11a, 11b bzw. 11c übergeleitet. Wie Figur 1 zeigt, verläuft das mittlere Förderband 11b direkt in Förderrichtung F, während die beiden äußeren Förderbänder 11a und 11c relativ zum mittleren Förderband 11b um ein geringes Maß schräg nach außen verlaufen. Dies führt dazu, daß die Förderbänder 11a, 11b, 11c und somit die auf ihnen befindlichen Tuben 12 am abgabeseitigen, gemäß Figur 1 oberen Ende der Leitvorrichtung 10 quer zur Förderrichtung F einen vergrößerten gegenseitigen Abstand aufweisen. Von den Förderbändern 11a, 11b, 11c werden die Tuben dann entweder direkt an eine Verarbeitungsstation übergeben oder auf ein weiterführendes Förderband aufgegeben.

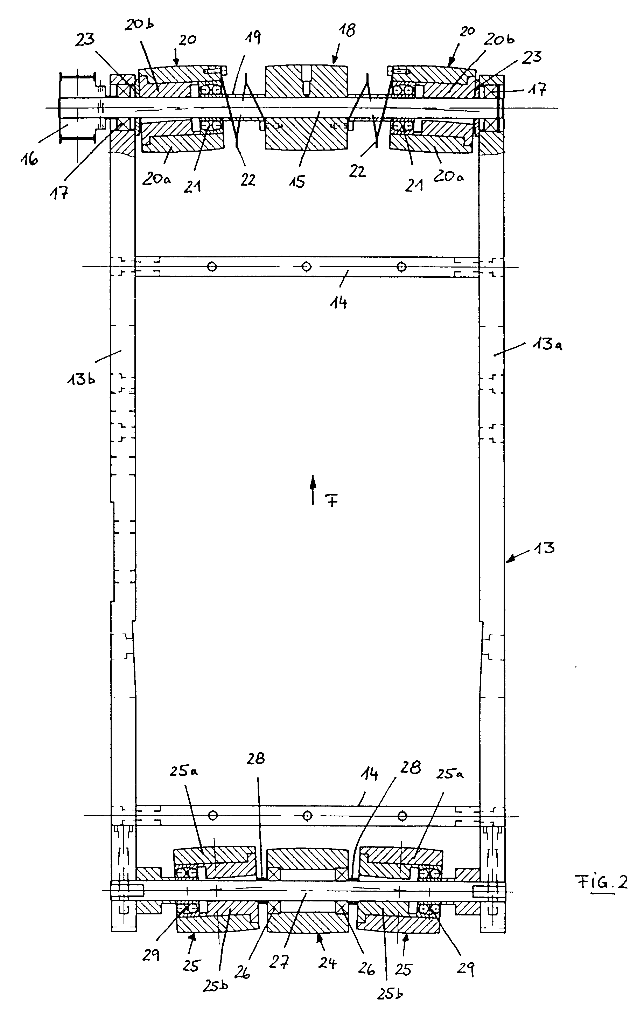

Die Lager- und Antriebskonstruktion der Förderbänder 11a, 11b und 11c ist in Figur 2 dargestellt und weist einen ebenen Rahmen 13 auf, der zwei seitlich beabstandete, in Förderrichtung F verlaufende Längsträger 13a, 13b umfaßt, die über zwei beabstandete Querträger 14 zu dem Rahmen verbunden sind. Am oberen Ende der Längsträger 13a, 13b ist über Lager 17 eine quer verlaufende Antriebswelle 15 drehbar gelagert, die außenseitig des einen Längsträgers 13b vorsteht und dort ein Kettenrad oder eine Riemenscheibe 16 trägt, über die sie mittels einer Kette oder eines Riemens in nicht dargestellter Weise in Drehung versetzt werden kann. Im Mittelbereich der Antriebswelle 15 ist eine Rolle 18 drehfest auf dieser befestigt. Die Rolle 18 dient zur Aufnahme des mittleren, gradlinig verlaufenden Förderbandes 11b.

Für die seitliche Förderbänder 11a und 11c ist auf der Antriebswelle 15 jeweils eine Rolle 20 gelagert. Die Rolle 20 ist mit Spiel auf die Antriebswelle 15 aufgesetzt und ist somit relativ zu dieser frei drehbar. Darüber hinaus kann sie über ein balliges Kugellager 21 eine Pendel- oder Schwenkbewegung relativ zur Antriebswelle 15 um eine senkrecht zu dieser verlaufenden Schwenkachse durchführen. Die Rolle 20 besteht aus einem im wesentlichen zylindrischen metallenen Grundkörper 20a, der das ballige Kugellager 21 trägt. In einen Teilbereich seiner Länge ist in den Grundkörper 20a eine rohr- bzw. zylinderförmige Kunststoff-Buchse 20b eingesetzt, die eine sich leicht konisch erweiternde Innenbohrung besitzt, über die die Rolle 20 auf der Antriebswelle 15 pendelbar gelagert ist. Die Kunststoff-Buchse 20b bestimmt die Schrägstellung der Rolle 20 auf der Antriebswelle 15 und ist auswechselbar am Grundkörper 20a gehalten, so daß bei Verschleiß der Buchse 20b oder einer anderen gewünschten Schrägstellung der Rolle 20 eine neue oder andere Buchse eingesetzt werden kann.

Zwischen der mittleren Rolle 18 und den seitlichen Rollen 20 ist jeweils eine Distanzhülse 19 angeordnet und zwischen den seitlichen äußeren Enden der jeweiligen seitlichen Rolle 20 und dem zugeordneten Längsträger 13a bzw. 13b ist eine Anschlagscheibe 23 vorgesehen, die vorzugsweise aus einem Material mit geringem Reibungskoeffizienten besteht.

Die mittlere Rolle 18 ist mit den seitlichen Rollen 20 jeweils über eine Spiralfeder 22 gekoppelt, die um die Antriebswelle 15 herum verläuft und an ihren Enden fest an der jeweiligen Rolle angebracht ist. Die Spiralfeder 22 stellt eine drehfeste Verbindung zur Übertragung der Drehbewegung dar, kann jedoch bei einer Pendelbewegung der seitlichen Rollen 20 diese aufgrund ihrer in Längsrichtung gegebenen Elastizität ausgleichen.

Am entgegengesetzten unteren Ende der Längsträger 13a und 13b ist eine quer verlaufende Lagerstange 27 vorgesehen, auf der eine mittlere Rolle 24 über Lager 26 drehbar gelagert ist. Die mittlere Rolle 24 steht mit der mittleren Rolle 18 auf der Antriebswelle 15 in Fluchtung, so daß über diese beiden Rollen das mittlere gradlinige Förderband 11b verlaufen kann.

Unter Zwischenschaltung von seitlichen, elastischen Distanzhülsen 28 ist auf der Lagerstange 27 jeweils eine seitliche Rolle 25 über jeweils ein endseitiges, balliges Kugellager 29 drehbar gelagert. Auch die Rollen 25 weisen die oben genannten Aufbau aus einem zylindrischen Grundkörper 25a und einer zylinderförmigen Kunststoff-Buchse 25b auf, wobei die Rollen 25 mit einem derartigen Spiel auf die Lagerstange 27 aufgesetzt sind, so daß sie eine Pendelbewegung um eine Achse senkrecht zur Längsachse der Lagerstange 27 ausführen können. Zwischen jeweils einer der seitlichen Rollen 25 und der zugeordneten oberen seitlichen Rolle 20 der Antriebswelle 15 erstrecken sich die seitlichen Förderbänder 11a bzw. 11c.

Wenn die Antriebswelle 15 in Drehung versetzt wird, dreht sich auch die mit ihr drehfest verbundene Rolle 18, wodurch das mittlere Förderband 11b bewegt wird und die untere mittlere Rolle 24 sich um die Tragstange 27 dreht.

Die Drehbewegung der mittleren Rolle 18 wird über die Drehfedern 22 auf die jeweils zugeordnete seitliche Rolle 20 übertragen, wodurch sie ebenfalls um die Längsachse der Antriebswelle 15 angetrieben wird. Aufgrund der sich aus der Steifigkeit der Förderbänder 11a bzw. 11c ergebenden Widerstandskraft behält die seitliche Rolle 20 ihre Schrägstellung 20 relativ zur mittleren Rolle 18 auch während der Drehung bei, wobei sie aufgrund ihrer pendelnden Lagerung bei der Drehung einer kontinuierlichen Verstellung oder Anpassung unterliegt. Entsprechendes gilt für die seitlichen Rollen 25 am entgegengesetzten Ende des Förderbandes, die ebenfalls in ihrer relativ zur mittleren Rolle 24 schräg gestellten Lage gehalten werden. Aufgrund der genannten Konstruktion ist es möglich, die mittleren Rollen und die zugeordneten seitlichen Rollen mittels einer gemeinsamen Antriebswelle 15 anzutreiben, obwohl die Längsachsen der Rollen nicht parallel zueinander verlaufen.

## Patentansprüche

1. Fördervorrichtung in einer Verpackungsmaschine, mit der mehrere quer zur Förderrichtung (F) nebeneinander angeordnete Verpackungen und/oder Produkte (12) zusammen transportierbar sind, wobei eine Leitvorrichtung (10) vorgesehen ist, mittels der der gegenseitige Abstand der Verpackungen und/oder Produkte (12) quer zur Förderrichtung (F) veränderbar ist, dadurch gekennzeichnet, daß die Leitvorrichtung (10) mehrere nebeneinander in Förderrichtung (F) verlaufende Förderbänder (11a, 11b, 11c) zur Aufnahme jeweils einer Verpackung und/oder eines Produkts (12) aufweist, die derart schräg zueinander ausgerichtet sind, daß ihr gegenseitiger, quer zur Förderrichtung (F) gemessener Abstand sich in Förderrichtung (F) ändert und daß die Förderbänder (11a, 11b, 11c) im wesentlichen gleich lang sind und mittels einer gemeinsamen Antriebsvorrichtung (16) antreibbar sind.

2. Fördervorrichtung nach Anspruch 1, dadurch gekennzeichnet, daß die Förderbänder (11a, 11b, 11c) eine gemeinsame Antriebswelle (15) aufweisen, auf der mehrere Rollen (18, 20) gelagert sind, wobei jedem Förderband eine der Rollen (18, 20) zugeordnet ist.

3. Fördervorrichtung nach Anspruch 2, dadurch gekennzeichnet, daß eine der Rollen, insbesondere eine mittlere Rolle (18) drehfest mit der Antriebswelle (15) verbunden ist, daß die anderen Rollen (20) drehbar und pendelbar auf der Antriebswelle (15) gelagert sind und daß die Drehbewegung der mittleren Rolle (18) mittels jeweils eines Übertragungselementes (22) auf die anderen Rollen (20) übertragbar ist.

4. Fördervorrichtung nach Anspruch 3, dadurch gekennzeichnet, daß das Übertragungselement (22) die mittlere Rolle (18) mit der jeweiligen seitlichen Rolle (20) drehfest verbindet, jedoch die Pendelbewegung der seitlichen Rolle (20) relativ zur mittleren Rolle (18) zuläßt.

5. Fördervorrichtung nach Anspruch 3 oder 4, dadurch gekennzeichnet, daß das Übertragungselement (22) eine um die Antriebswelle (15) umlaufende Spiralfeder ist.
